# EUROPÄISCHE PATENTSCHRIFT

(11) **EP 1 670 110 B1**
(45) Veröffentlichungstag und Bekanntmachung des Hinweises auf die Patenterteilung: **10.12.2008**
(21) Anmeldenummer: 05025849.0
(22) Anmeldetag: 26.11.2005
(51) Int. Cl.: H02G 3/04

(54) **Endplatte für Leitungsführungskanäle**
End plate for cable conduits
Plaque d'extrémité pour conduites de câbles

(30) Priorität: 08.12.2004 DE 202004018974 U
(43) Veröffentlichungstag der Anmeldung: 14.06.2006
(73) Patentinhaber: Tehalit GmbH, 67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- EP-A- 1 246 333
- WO-A-97/11519
- US-B1- 6 483 027

## Beschreibung

Die Erfindung betrifft Endplatten gemäß dem Oberbegriff des Anspruchs 1 zur Verwendung als seitlicher Abschluss von Leitungsführungskanälen mit unterschiedlichen Breiten und/oder Höhen.

Leitungsführungskanäle der hier relevanten Art bestehen aus einem Unterteil, zu befestigen an Wand oder Decke, und einem daran lösbar zu befestigenden Oberteil. Das Unterteil ist im wesentlichen trogförmig und besitzt einen in etwa U- bzw. C-förmigen Querschnitt.

Um die Leitungsführungskanäle an ihrem rechten oder linken Ende verschließen zu können, gibt es seit je her rechte und linke Endstücke. Diese sind zueinander spiegelsymmetrisch. Die Kanalhersteller müssen somit für jeden Kanal zwei derartige Formstücke produzieren, listen und versenden. Der Installateur muss darauf achten, dass der das richtige Formstück bestellt. Erfahrungsgemäß kommt es immer wieder zu Verwechslungen. Der Installateur kann seinen Kanal nicht fertig montieren, der Hersteller muss einzelne Formstücke verschicken. Das ist unbefriedigend.

Verschärft werden die beschriebenen Probleme noch dadurch, dass praktisch alle Leitungsführungskanäle in unterschiedlichen Höhen und/oder Breiten produziert werden, entsprechend der aufzunehmenden Leitungen und Kabel. Dies bedeutet, dass die Kanalhersteller für jede Kanalgröße passende Endstücke produzieren, listen und versenden, die Installateure die richtigen Endstücke bestellen und montieren müssen. Das ist unbefriedigend.

Der vorliegenden Erfindung liegt die Aufgabe zugrunde, eine Endplatte anzugeben, welche für den rechten und den linken seitlichen Abschluss von Leitungsführungskanälen mit vier unterschiedlichen Querschnitten geeignet ist.

Diese Aufgabe wird gelöst durch eine Endplatte mit den Merkmalen des Anspruchs 1.

Der vorliegenden Erfindung liegt das Prinzip zugrunde, durch Umstecken von vier Sichtteilen und Aufstecken derselben auf eine Basisplatte, die die Verankerung am Leitungsführungskanal bewirkt, die vier Kanäle mit unterschiedlichen Breiten und/oder Höhen abzudecken. Dabei wird in jedem Fall eine sichere Verbindung und eine optisch ansprechende Ansicht gewährleistet.

Gemäß einer Ausgestaltung der Erfindung sind die Verlängerungen an der einen Zwischenplatte bzw. der einen Eckplatte um die Materialstärke der zugehörigen Platten zurückgesetzt. Dadurch ergibt sich bei der Ausführung der Endplatte für die großen Kanalquerschnitte eine ansprechende, symmetrische Ansicht.

Um die Befestigung der als Verankerung im Kanal dienenden Basisplatte mit den Zwischen- und Endstücken sicher zu gestalten, besitzen die Öffnungen in der Basisplatte einen federnden Rand.

Um zu gewährleisten, dass auch bei der Ausführung der Endplatten für die kleinen Kanalquerschnitte die Zwischen- und Eckplatten stets parallel liegen, sind an der Basis der Zapfen Leisten für den Höhenausgleich angeformt.

Da diese Höhenausgleichsleisten bei bestimmten Konstellationen den Zusammenbau der Zwischen- und Eckplatten stören könnten, besitzen die Öffnungen auf den Verlängerungen der Zwischen- und Eckplatte seitliche Ausschnitte, passend zu den Höhenausgleichsleisten.

Anhand der Zeichnung soll die Erfindung in Form eines Ausführungsbeispiels näher erläutert werden. Es zeigen
- Fig. 1: in Form eines Sprengbildes einen Blick auf die Innenseite der fünf Einzelteile, aus denen sich Endplatten mit vier unterschiedlichen Querschnitten für den seitlichen Abschluss von Leitungsführungskanälen mit unterschiedlichen Breiten und/oder Höhen zusammenstecken lassen,
- Fig. 2: einen Blick auf die Innenseite eines Endstücks maximaler Höhe und maximaler Breite, hergestellt aus den Einzelteilen der Fig. 1,
- Fig. 3: eine Außenansicht des Endstücks der Fig. 2,
- Fig. 4: einen Blick auf die Innenseite eines Endstücks maximaler Breite und minimaler Höhe, hergestellt aus den Einzelteilen der Fig. 1,
- Fig. 5: eine Außenansicht des Endstücks der Fig. 4,
- Fig. 6: einen Blick auf die Innenseite eines Endstücks maximaler Höhe und minimaler Breite,
- Fig. 7: eine Außenansicht des Endstücks der Fig. 6,
- Fig. 8: einen Blick auf die Innenseite eines Endstücks minimaler Breite und minimaler Höhe, hergestellt aus den Einzelteilen der Fig. 1, und
- Fig. 9: eine Außenansicht des Endstücks der Fig. 5.

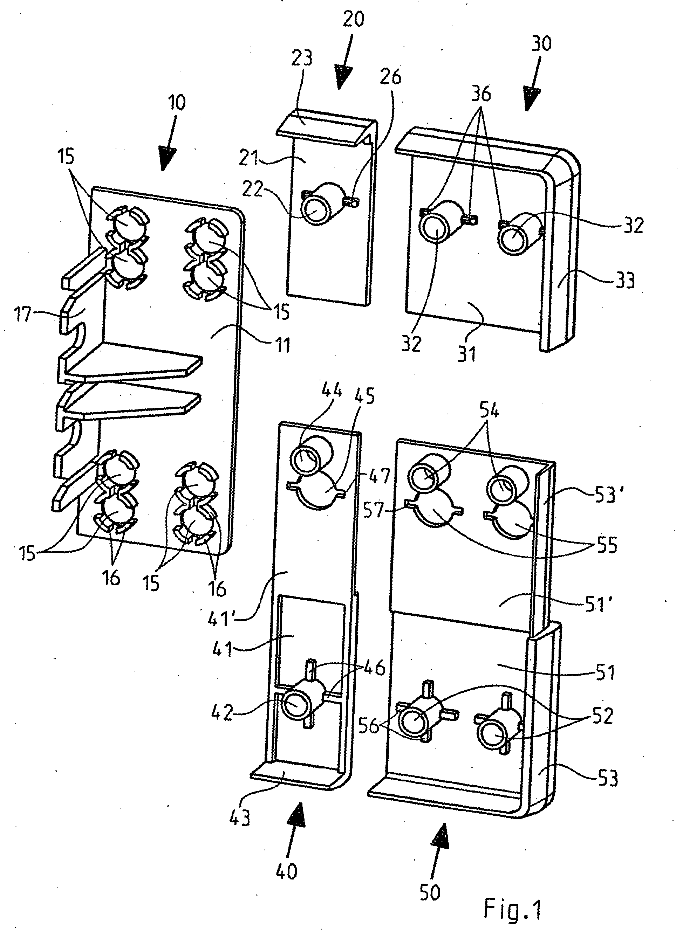

Fig. 1 zeigt in isometrischer Darstellung und als Sprengbild fünf Einzelteile, aus denen sich Endplatten für den rechten und den linken seitlichen Abschluss von Leitungsführungskanälen (nicht dargestellt) mit zwei unterschiedlichen Breiten und/oder zwei unterschiedlichen Höhen ohne Verwendung von Werkzeugen zusammenstecken lassen.

Bei den Einzelteilen handelt es sich um eine Basisplatte 10, eine erste Zwischenplatte 20, eine zweite Zwischenplatte 40, eine erste Eckplatte 30 und eine zweite Eckplatte 50.

Die Basisplatte 10 besitzt eine ebene Platte 11, auf der eine Klemmleiste 17 errichtet ist, die die Verbindung zu dem Leitungsführungskanal (nicht dargestellt) bewirkt. Außerdem sind in der ebenen Platte 11 zwei Paare von je vier Öffnungen 15 vorgesehen. Diese Öffnungen 15 besitzen einen federnden Rand 16.

Die erste Zwischenplatte 20 besitzt einen winkelförmigen Rand 23 und einen Zapfen 22, der in eine der Öffnungen 15 in der Basisplatte 10 passt. An der Basis des Zapfens 22 sind zwei kurze Leisten 26 angeformt, die als Höhenausgleich dienen. Einzelheiten sollen weiter unten erläutert werden.

Die zweite Zwischenplatte 40 besitzt ebenfalls eine ebene Platte 41, auf der ein Zapfen 42 errichtet ist, der in eine der Öffnungen 15, 16 der Basisplatte 10 passt. Die Basis des Zapfens 42 ist wieder mit Höhenausgleichsleisten 46 bestückt.

Die ebene Platte 41 besitzt eine Verlängerung 41', die gegenüber der ebenen Platte 41 um eine Materialstärke zurückgesetzt ist. Die Verlängerung 41' trägt ihrerseits einen Zapfen 44 und daneben eine Öffnung 45. Der Zapfen 44 passt in eine der Öffnungen 15 der Basisplatte 10. Die Öffnung 45 ist mit seitlichen Ausschnitten 47 versehen, passend zu den Höhenausgleichsleisten 26 der ersten Zwischenplatte 20.

Des weiteren zeigt Fig. 1 die erste Eckplatte 30 mit einer ebenen Platte 31 und einem winkelförmigen Rand 33. Die ebene Platte 31 trägt zwei Zapfen 32 mit Höhenausgleichsleisten 36. Die Zapfen 36 passen zu den Öffnungen 15 der Basisplatte 10.

Schließlich zeigt Fig. 1 noch die zweite Eckplatte 50 mit ihrer ebenen Platte 51, auf der zwei Zapfen 52 mit Höhenausgleichsleisten 56 errichtet sind. An der ebenen Platte 51 ist eine Verlängerung 51' angeformt, die um eine Materialstärke zurückversetzt ist. Die Verlängerung 51' besitzt ebenfalls einen winkelförmigen Rand 53', der gegenüber dem Rand 53 um eine Materialstärke zurückversetzt ist.

Schließlich trägt die Verlängerung 51' zwei Zapfen 54 und zwei Öffnungen 55 mit seitlichen Ausschnitten 57, passend zu den Höhenausgleichsleisten 26, 36 der ersten Zwischenplatte 20 bzw. der ersten Eckplatte 30.

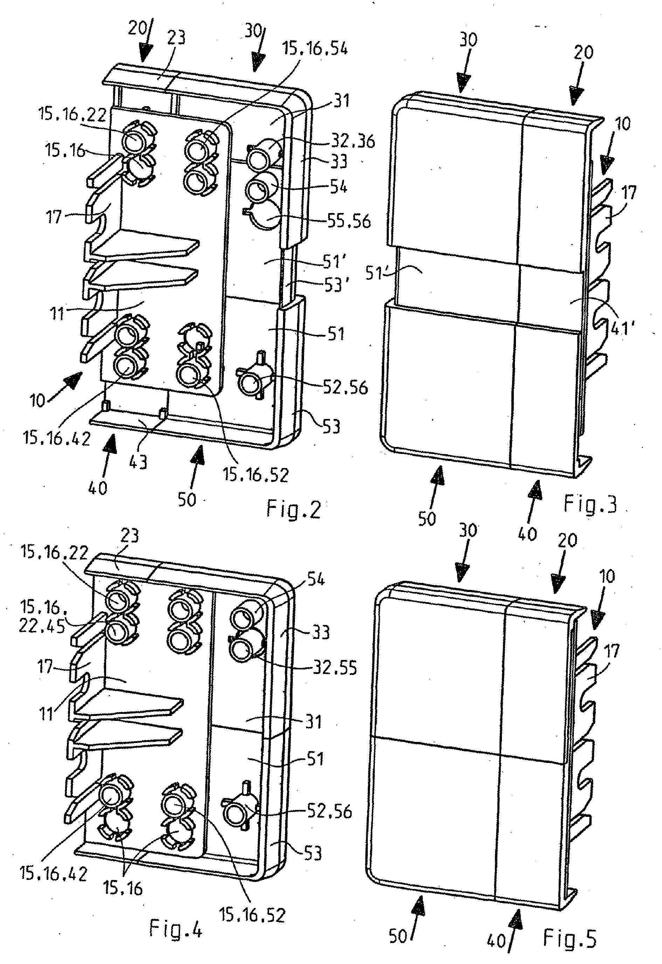

Fig. 2 als Innenansicht und Fig. 3 als Außenansicht zeigen als erstes Ausführungsbeispiel eine Endplatte mit maximaler Höhe und maximaler Breite, zusammengesteckt aus den fünf Einzelplatten 10, 20, 30, 40, 50. Die Zapfen 22, 32, 42, 52 der Zwischenplatten 20, 40 und der Eckplatten 30, 50 sind in die jeweils außen liegenden Öffnungen 15, 16 der Basisplatte 10 gesteckt.

Fig. 4 als Innenansicht und Fig. 5 als Außenansicht zeigen als zweites Ausführungsbeispiel eine Endplatte minimaler Höhe und maximaler Breite, zusammengesteckt aus den fünf Einzelplatten 10, 20, 30, 40, 50. Man erkennt, dass der Zapfen 32 der ersten Endplatte 30 durch die Öffnung 55 der zweiten Eckplatte 50 gesteckt ist, wobei die Höhenausgleichsleisten 36 in die Aussparungen 57 eintauchen, so dass die beiden Eckplatten 30, 50 völlig parallel zueinander liegen.

Sinngemäß das gleiche gilt auch für die beiden Zwischenplatten 20, 40 bzw. deren Zapfen 22 und Höhenausgleichsleisten 26 bzw. Öffnungen 45 und seitlichen Aussparungen 47.

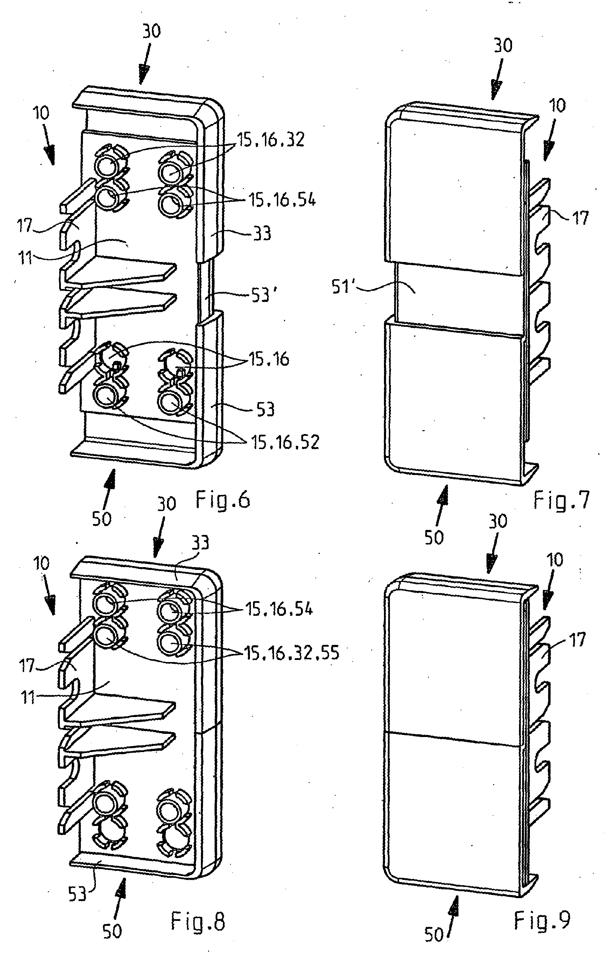

Fig. 6 als Innenansicht und Fig. 7 als Außenansicht zeigen als drittes Ausführungsbeispiel eine Endplatte maximaler Höhe und minimaler Breite, zusammengesteckt aus der Basisplatte 10 und den beiden Eckplatten 30, 50. Die beiden Zwischenplatten 20, 40 sind nicht erforderlich.

Fig. 8 als Innenansicht und Fig. 9 als Außenansicht zeigen als viertes Ausführungsbeispiel eine Endplatte minimaler Höhe und minimaler Breite, zusammengesteckt aus der Basisplatte 10 und den beiden Eckplatten 30, 50. Auch in diesem Fall sind die beiden Zwischenplatten 20, 40 nicht erforderlich.

## Patentansprüche

1. Endplatte für den seitlichen Abschluss von Leitungsführungskanälen mit unterschiedlichen Breiten und/oder Höhen, **gekennzeichnet durch**
- fünf Einzelelemente (10, 20, 30, 40, 50) mit je einer ebenen Platte (11, 21, 31, 41, 51)
- eine der Platten ist die Basisplatte (10) mit
-- einer Klemmleiste (17), passend zu dem Leitungsführungskanal,
-- und zwei Paaren von je vier Öffnungen (15),
- zwei der Platten sind Eckplatten (30, 50) mit
-- einem winkelförmigen Rand (33, 53)
-- und je einem Paar von Zapfen (32, 52), klemmend passend zu den Öffnungen (15) in der Basisplatte (10),
- zwei der Platten sind Zwischenplatten (20, 40) mit
-- einem stirnseitigen Rand (23, 43)
-- und einem Zapfen (22, 42), klemmend passend zu den Öffnungen (15) in der Basisplatte (10),
- je eine Zwischenplatte (40) und eine Eckplatte (50) besitzen eine Verlängerung (41', 51') der ebenen Platte (41, 51),
- die Verlängerung (41') der Zwischenplatte (40) trägt
-- einen Zapfen (44), klemmend passend zu den Öffnungen (15) der Basisplatte (10),
-- und eine Öffnung (45), klemmend passend zu dem Zapfen (22) der anderen Zwischenplatte (20),
- die Verlängerung (51') der Eckplatte (50) trägt
-- ein Paar Zapfen (54), klemmend passend zu den Öffnungen (15) der Basisplatte (10),
-- und ein Paar Öffnungen (55), klemmend passend zu den Zapfen (32) der anderen Eckplatte (30).

2. Endplatte nach Anspruch 1, **gekennzeichnet durch** das Merkmal:
- die Verlängerungen (41', 51') sind um die Materialstärke der zugehörigen Platten (41, 51) zurück versetzt.

3. Endplatte nach Anspruch 1 oder 2, **gekennzeichnet durch** das Merkmal:
- die Öffnungen (15) der Basisplatte (10) besitzen einen federnden Rand (16).

4. Endplatte nach einem der Ansprüche 1 bis 3, **gekennzeichnet durch** das Merkmal:
- an der Basis der Zapfen (22, 32, 42, 52) auf den ebenen Platten (21, 31, 41, 51) der Zwischen- und Eckplatten (20, 30, 40, 50) sind Leisten (26, 36, 46, 56) für den Höhenausgleich angeformt.

5. Endplatte nach Anspruch 4, **gekennzeichnet durch** das Merkmal:
- die Öffnungen (45, 55) auf den Verlängerungen (41', 51') der Zwischen- und Eckplatte (40, 50) besitzen seitliche Ausschnitte (47, 57), passend zu den Leisten (26, 36) für den Höhenausgleich.

## Claims

1. End plate for the lateral closure of wiring trunking with different widths and/or heights, **characterised by**
- five individual elements (10, 20, 30, 40, 50) each with a plane plate (11, 21, 31, 41, 51),
- one of the plates is the base plate (10) with
-- a terminal strip (17), matching the wiring trunking,
-- and two pairs of four openings (15) in each case,
- two of the plates are corner plates (30, 50) with
-- an angular rim (33, 53)
-- and a respective pair of pins (32, 52), matching the openings (15) in the base plate (10)in relation to the terminals,
- two of the plates are intermediate plates (20, 40) with
-- a front-side rim (23, 43)
-- and a pin (22, 42), matching the openings (15) in the base plate (10) in relation to the terminals,
- an intermediate plate (40) and a corner plate (50) in each case have an extension (41', 51') of the plane plate (41, 51),
- the extension (41') of the intermediate plate (40) bears
-- a pin (44), matching the openings (15) of the base plate (10) in relation to the terminals,
-- and an opening (45), matching the pin (22) of the other intermediate plate (20) in relation to the terminals,
- the extension (51') of the corner plate (50) bears
-- a pair of pins (54), matching the openings (15) of the base plate (10) in relation to the terminals,
-- and a pair of openings (55), matching the pins (32) of the other corner-plate (30) in relation to the terminals.

2. End plate according to Claim 1, **characterised by** the feature:
- the extensions (41', 51') are set back by the material thickness of the associated plates (41, 51).

3. End plate according to Claim 1 or 2, **characterised by** the feature:
- the openings (15) of the base plate (10) have a resilient rim (16).

4. End plate according to any one of Claims 1 to 3, **characterised by** the feature:
- ledges (26, 36, 46, 56) for height adjustment are formed on the base of the pins (22, 32, 42, 52) on the plane plates (21, 31, 41, 51) of the intermediate and corner plates (20, 30, 40, 50).

5. End plate according to Claim 4, **characterised by** the feature:
- the openings (45, 55) in the extensions (41', 51') of the intermediate and corner plate (40, 50) have lateral cutouts (47, 57), matching the ledges (26, 36) for the height adjustment.

## Revendications

1. Plaquette ou plaque d'extrémité pour fermer les côtés de goulottes de câbles de différentes largeurs et/ou hauteurs, **caractérisée par**
- cinq éléments distincts (10, 20, 30, 40, 50) comprenant chacun une plaquette ou plaque plane (11, 21, 31, 41, 51),
- l'une des plaquettes ou plaques constituant la plaquette ou plaque de base (10) et comprenant
-- une barre de serrage (17) conçue de manière à être adaptée à la goulotte de câbles,
-- et deux paires de quatre ouvertures (15) chacune,
- deux des plaquettes ou plaques étant des plaquettes ou plaques d'angle (30, 50) et comprenant
- un bord en forme d'équerre (33, 53)
-- et chacune une paire de tétons (32, 52) complémentaires aux ouvertures (15) dans la plaquette ou plaque de base (10), de manière à réaliser un serrage,
- deux des plaquettes ou plaques étant des plaquettes ou plaques intermédiaires (20, 40) et comprenant
-- un bord frontal (23, 43)
-- et un téton (22, 42) complémentaire aux ouvertures (15) dans la plaquette ou plaque de base (10), de manière à réaliser un serrage,
- une plaquette ou plaque intermédiaire (40) et une plaquette ou plaque d'angle (50) possédant chacune un prolongement (41', 51') de la plaquette ou plaque plane (41, 51),
- le prolongement (41') de la plaquette ou plaque intermédiaire (40) portant
-- un téton (44) complémentaire aux ouvertures (15) dans la plaquette ou plaque de base (10), de manière à réaliser un serrage,
-- et une ouverture (45) complémentaire au téton (22) de l'autre plaquette ou plaque intermédiaire (20), de manière à réaliser un serrage,
- le prolongement (51') de la plaquette ou plaque d'angle (50) portant
-- une paire de tétons (54) complémentaires aux ouvertures (15) dans la plaquette ou plaque de base (10), de manière à réaliser un serrage,
-- et une paire d'ouvertures (55) complémentaires aux tétons (32) de l'autre plaquette ou plaque d'angle (30).

2. Plaquette ou plaque d'extrémité selon la revendication 1, **caractérisée en ce que** les prolongements (41', 51') sont en retrait d'une distance correspondant à l'épaisseur des plaquettes ou plaques associées (41, 51).

3. Plaquette ou plaque d'extrémité selon la revendication 1 ou 2, **caractérisée en ce que** les ouvertures (15) de la plaquette ou plaque de base (10) possèdent un bord faisant ressort (16).

4. Plaquette ou plaque d'extrémité selon l'une des revendications 1 à 3, **caractérisée en ce que** sur les plaquettes ou plaques planes (21, 31, 41, 51) des plaquettes ou plaques intermédiaires et d'extrémité (20, 30, 40, 50), à la base des tétons (22, 32, 42, 52), sont ménagées ou formées des baguettes (26, 36, 46, 56) pour compenser les différences de hauteur.

5. Plaquette ou plaque d'extrémité selon la revendication 4, **caractérisée en ce que** les ouvertures (45, 55) sur les prolongements (41', 51') des plaquettes ou plaques intermédiaire et d'angle (40, 50) possèdent des découpes latérales (47, 57) complémentaires aux baguettes (26, 36) destinées à compenser les différences de hauteur.
